# EUROPEAN PATENT APPLICATION

(11) **EP 1 324 334 A1**
(43) Date of publication of application: **02.07.2003**
(21) Application number: 02738676.2
(22) Date of filing: 12.06.2002
(51) Int. Cl.: G11B 20/10, G11B 20/12, G06F 3/06

(54) **DISC DRIVE DEVICE AND ITS CONTROLLER**

(30) Priority: 13.06.2001 JP 2001178108
(71) Applicant: MATSUSHITA ELECTRIC INDUSTRIAL CO., LTD., Kadoma-shi, Osaka 571-8501 (JP)
(72) Inventor: YAMAMOTO, Youichi, Hiroshima-shi, Hiroshima 733-0843 (JP); KAWASAKI, Masahiro, Hiroshima-shi, Hiroshima 731-5106 (JP); IMADA, Masayuki, Hiroshima-shi, Hiroshima 734-0022 (JP); SUETOMO, Toru, Higashihiroshima-shi, Hiroshima 739-0036 (JP)
(74) Representative: Holmes, Miles
(86) International application number: JP0205881
(87) International publication number: WO02103697

(57) **Abstract**

A hard disk drive 102 includes: a disk 11 that stores data in units of sectors; a ROM unit 12 and a RAM unit 13 that store sector information D showing an extent to which a maximum number of transfer-target sectors can be extended; and a control unit 14. The control unit 14 sends the sector information D in response to an inquiry from a controller 101 about the sector information D, extends the maximum number of the transfer-target sectors in accordance with a transfer request for transferring data and with an instruction from the external device on receiving the transfer request while in a state of being instructed by the instruction to ease the restrictions, and transfers data to/from the disk 11.

## Description

### Technical Field

The present invention relates to a disk drive device such as a hard disk drive and to a control device that controls the disk drive device, and particularly to a disk drive device and its control device that transfer a large amount of data in between.

### Background Art

In recent years, consumer digital apparatuses containing large-capacity hard disk drives (HDDs) as auxiliary storage are becoming popular.

Other than HDDs, optical disc drives represented by a DVD-RAM (digital-versatile-disc random access memory) and the like are also used as auxiliary storage of consumer digital apparatuses for audio/video (AV)-related use. At present an HDD has a larger recording capacity than a DVD-RAM, and contains a magnetic head that weighs less than a head of an optical pickup for an optical disc, which enables the HDD's head to move faster. Accordingly, an HDD achieves better random access function and is therefore more suitable than an optical disc drive for simultaneous recording/playing operation, which is often required for the AV-related use.

In order to use an HDD as auxiliary storage of a consumer digital AV apparatus, the HDD needs to support control commands dedicated to AV-related application. This, however, incurs high cost, and therefore it is now preferred to use an HDD in an ordinary personal computer (PC).

The following describes a PC environment containing an HDD.

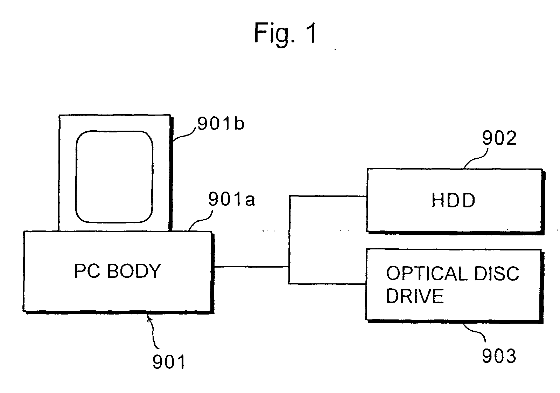

Fig. 1 shows the structure of such PC environment.

The PC environment shown in the figure includes the following elements: a PC 901 as a host; an HDD 902 under the control of the PC 901; and an optical disc drive 903 that reads/writes data from/into a DVD-RAM under the control of the PC 901.

The PC 901 includes the following elements: a PC body 901a that includes a control unit such as a CPU (central processing unit); and a display unit 901b. The PC body 901a transfers data to/from the HDD 902 and the optical disc drive 903.

Protocols used in such a PC environment for controlling peripheral units include Small Computer System Interface (SCSI), Advanced Technology Attachment (ATA), Advanced Technology Attachment Packet Interface (ATAPI), and Serial Bus Protocol-2 (SBP). The most commonly used of all of them are ATA and ATAPI.

The ATA standard is the interface standard produced in 1988 by a group of drive manufacturers by unifying specifications based on Integrated Drive Electronics (IDE) interface for HDDs, whose specification was complied in 1986 by Western Digital.

The ATAPI standard is an extended standard based on the ATA standard, which was then used exclusively for HDDs. The ATAPI standard enables connection of four drives at most including an optical disc drive such as for a CD-ROM (compact disc read-only memory).

Both of the above two standards generally require a 40-pin connector and a 40-conductor flat cable for connecting a drive to a host.

The ATA and ATAPI standards, commonly used in the PC environment, are based on the IDE standard according to which the CPU directly controls a drive. As a result, connection can be established using a simple interface circuit, and therefore these standards are not only cost-effective but also save ISA (Industry Standard Architecture) card slots that often run short in the PC environment.

As the ATA and ATAPI standards achieve data writing/reading into/from an HDD and an optical disc drive, they are suited to be used as storage of consumer digital AV apparatuses. Generally, a storage unit in a consumer digital AV apparatus is categorized according to its use as either temporary storage or semipermanent storage. An HDD is suited to be used as temporary storage, while a rewritable optical disc such as a DVD-RAM is suited to be used as semipermanent storage since it is a removable recording medium.

When data is transferred between the host and an HDD, the host issues a command to the HDD to request data transfer. The amount of data transferred via this command is limited by sectors of the HDD and other information related to the sectors' handling. When an HDD such as that used in the PC environment shown in Fig. 1 is used for AV-related operation involving high-volume data transfer, the number of command issuances by the host increases due to the above limitations. This increases the command overhead and requires longer time for transferring data. Such use of an HDD has therefore drawback of low data transfer efficiency.

For instance, while the sector size of a standard optical disc such as a DVD-RAM is 2,048 bytes, the sector size of a standard HDD is only 512 bytes, that is, a quarter of the DVD-RAM's sector size. The host therefore needs to control access to the HDD four times more often than to the optical disc drive when transferring the same amount of data, which increases the command overhead involved by data access operation.

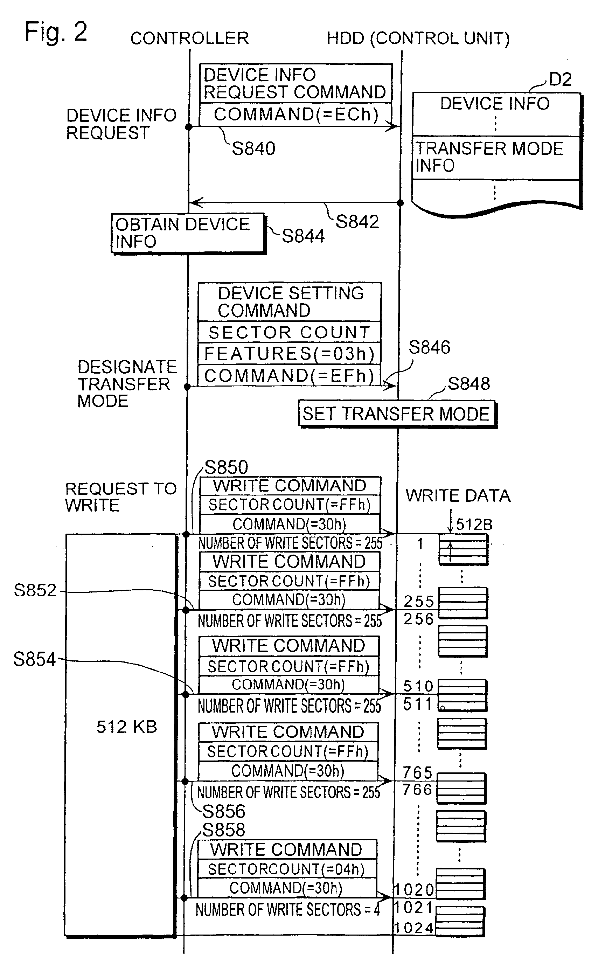

The following specifically describes operation for the host to write 512-KB (kilobytes) data into an HDD conforming to the ATA standard with reference to Fig. 2.

Fig. 2 is a sequence diagram showing the operation for the host to write data into the HDD.

The host issues a device information request command (IDENTITY DEVICE command = ECh) to the HDD to request device information D2 (step S840). The device information D2 relates to the HDD storing this information D2 and includes transfer mode information showing a transfer mode for the HDD. The "transfer mode" refers to a transfer method determined in accordance with a data transfer rate and the like, and may be shown, for instance, as "multi-word DMA transfer", or "UltraDMA transfer" in the above transfer information.

On receiving this device information request command, the HDD sends the device information D2 it stores to the host (step S842).

The host obtains this device information D2 (step S844), specifies a transfer mode that can be set for data transfer to/from the host and the HDD by referring to the transfer mode information in the device information D2. The host then issues a device setting command (SET_FEATURES command = EFh) to notify the HDD of the specified transfer mode (step S846). More specifically, this device setting command sets, in a FEATURES register, a subcode ("03h") showing that the transfer mode is specified, and a parameter showing the specified transfer mode in a SECTOR_COUNT register.

The HDD is thus notified by the above device setting command about the specified transfer mode, and sets the transfer mode in accordance with the setting command (step S848).

After this, the host issues a write command (WRITE_SECTORS command = 30h) to request the HDD to write data, and the HDD receives the write command and writes the data (step S850).

In the SECTOR_COUNT register of the above write command, a number of sectors into which the write should be performed is set. Hereafter, such sectors are called "write sectors". The SECTOR_COUNT register is 8 bits long. When one of parameters from "01h" to "FFh" is set in this register, the host can request a write into 1 to 255 sectors, and the HDD can perform a write into 1 to 255 sectors.

Whenever the HDD receives a write command including a parameter "FFh" in the above register, the HDD writes 128-KB (= 255 sectors x 512 bytes) data.

However, if the host is going to write 512-KB data into the HDD, the host is required to issue write commands like the above three times (steps S852, S854, and S856) and a write command, which includes a parameter "04h" in the SECTOR_COUNT register, once (step S858). This is because issuing the above write command only once results in a write of only 128-KB data at most into the HDD as the SECTOR_COUNT register is 8 bits long.

Unlike such data transfer to the HDD, transfer of 512-KB data to an optical disc drive requires only one write command execution since the sector size of a DVD-RAM is 2,048 bytes.

In this way, when a conventional HDD used in the PC environment is utilized for AV-related operation, the number of write command issuances increases, which requires longer data transfer time and lowers transfer efficiency.

### Disclosure of the Invention

In view of the above problems, the present invention aims to provide a disk drive device that achieves improved data transfer efficiency to be suitable for the AV-related use, and also provide a control device that controls the disk drive device.

In order to achieve the above object, the disk drive device of the present invention transfers data to and from an external device, and includes: a disk that stores data in units of sectors; a storing unit operable to store sector information showing an extent to which restrictions on handling of the sectors can be eased for data transfer; and a control unit operable to send the sector information in response to an inquiry from the external device about the sector information, and transfer data to and from the disk in accordance with a transfer request for transferring data and with an instruction from the external device when the control unit receives the transfer request while in a state of being instructed by the instruction to ease the restrictions.

With the above construction, the restrictions on the sector handling for data transfer are eased in accordance with the instruction from the external device. This reduces a time taken for the control unit to write/read data into/from the disk, therefore enhances the data transfer efficiency, and enables the above disk drive device to transfer a large amount of data. As a result, the disk drive device is made suitable for the AV-related use.

Here, the sector information may show the extent, to which a number of sectors that can be accessed at a time can be extended, and, the control unit may extend the number of sectors when instructed to ease the restrictions.

For this construction, the number of sectors that can be accessed at a time for data transfer is extended. This reduces the number of accesses made by the control unit to the disk when a large amount of data is transferred, shortens a time taken by a read/write from/into the disk, and enhances the data transfer efficiency.

Here, the sector information may show the extent, to which an original size of each of the sectors can be extended, the extended size being regarded by the control unit as a size of each sector. The control unit may extend the original size of each of the sectors on receiving the transfer request while in a state of being instructed by the external device to ease the restrictions, and thereafter handle, as a sector, a part having the extended size in the disk.

With this construction, even when the number of sectors that can be accessed at a time for data transfer is restricted, the original sector size can be extended in accordance with the instruction from the external device. The control unit then regards, as a sector, a part having the extended sector size in the disk. This reduces the number of accesses made by the control unit to the disk when a large amount of data is transferred, shortens a time taken by a read/write from/into the disk, and enhances the data transfer efficiency.

When receiving the transfer request with a sector address designated while in a state of being instructed to ease the restrictions, the control unit may (a) extend the original size of each sector by an integral multiple, (b) handle, as a sector, a plurality of sectors having the extended size, (c) convert the designated address in accordance with the integral multiple, and (d) transfer data to and from sectors specified by the converted address.

With this construction, in accordance with the integral multiple of the address, the disk drive device converts the address designated by the external device. As a result, the external device does not need to change an address it designates depending on whether the original sector size is extended. This can prevent control operation of the external device from becoming complicated.

Here, the external device may make the transfer request in which an address is designated, the address being assigned to a sector of the disk. The sector information may show the extent, to which a range used for designating the address can be extended. The control unit may extend the range used for designating the address when instructed by the external device to ease the restrictions.

With this construction, the range used for designating the address is extended in accordance with the instruction from the external device. As a result, a large amount of data can be transferred.

The above objective is also achieved by a control device that controls a disk drive device, which (a) comprises a disk storing data in units of sectors, (b) stores sector information showing an extent to which restrictions on handling of the sectors can be eased for data transfer, and (c) transfers data to and from the disk in accordance with a transfer request for transferring data and with an instruction on receiving the transfer request while in a state of being instructed by the instruction to ease the restrictions. The control device makes an inquiry about the sector information to the disk drive device, instructs, in accordance with the sector information, the disk drive device to ease the restrictions, and then makes the transfer request to the disk drive device so as to transfer data to and from the disk drive device.

The above construction eases the restrictions on the sector handling for data transfer. This reduces a time taken to write/read data into/from the disk, therefore enhances the data transfer efficiency, and enables transfer of a large amount of data. As a result, the disk drive device is made suitable for the AV-related use.

Here, the sector information may show the extent, to which a number of sectors that can be accessed at a time can be extended, and, the control device may instruct, in accordance with the extent, the disk drive device to extend the number of sectors.

With this construction, the number of sectors that can be accessed at a time for data transfer is extended. This can reduce the number of accesses to the disk when a large amount of data is transferred, shorten a time taken by a read/write from/into the disk, and enhance the data transfer efficiency.

The present invention may be also embodied as a transfer method for transferring data between:(a) a disk drive device that includes a disk storing data in units of sectors; and (b) a control device that controls the disk drive device. It is also possible to embody the present invention as a program to have a computer perform such data transfer.

### Brief Description of Drawings

Fig. 1 shows the structure of a PC environment containing a conventional HDD.
Fig. 2 is a sequence diagram showing operation to write data into the HDD.
Fig. 3 is an external view of an AV system including an HDD and a controller of one embodiment according to the present invention.
Fig. 4 is a block diagram showing the above HDD.
Fig. 5 is a table showing contents of device information stored in the HDD.
Fig. 6 is a sequence diagram showing operation for the above controller to write data into the above HDD.
Figs. 7A and 7B are diagrams showing states in which data is written into the HDD.
Figs. 8A ∼ 8C are diagrams showing states in which data is written into the HDD.
Fig. 9 is a table showing the device information conforming to ATA standard.
Fig. 10 shows contents of a write command conforming to the ATA standard.
Fig. 11 is a sequence diagram showing operation to transfer data from the controller to the HDD according to the ATA standard.
Fig. 12 is a table showing another device information conforming to the ATA standard.
Fig. 13 is a sequence diagram showing operation to transfer data from the controller to the HDD according to the ATA standard.
Fig. 14 is a flowchart showing operation performed by the controller and the HDD to write data into the HDD after a write command has been sent.
Fig. 15 is a flowchart showing the procedure of standard ATA data transfer between a host and a device.
Fig. 16 is a flowchart showing the procedure of standard ATAPI data transfer between a host and a device.
Fig. 17 shows comparison of registers used by a read and a write conforming to the ATA and ATAPI standards.
Fig. 18 shows contents of a write command conforming to the ATAPI standard.
Fig. 19 is a table showing another device information of one embodiment according to the present invention.

### Best Mode for Carrying out the Invention

The following describes embodiments of a data transfer method according to the present invention with reference to drawings.

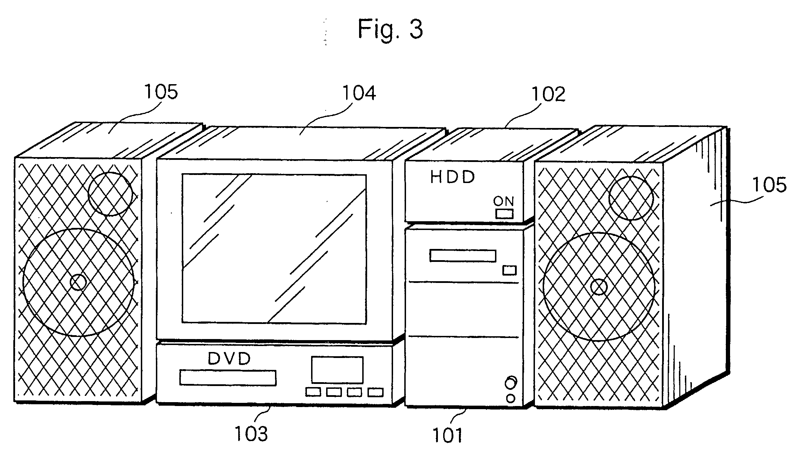

Fig. 3 is an external view showing an AV system of the present embodiment that includes a disk drive and its controller.

This AV system includes an HDD 102 and a controller 101 with improved data transfer efficiency suitable for AV-related use. The AV system includes the following: a television (TV) 104; an optical disc drive 103 that reads/writes data from/onto a DVD-RAM; the HDD 102; two speakers 105; and the controller 101 that controls the TV 104, the optical disc drive 103, the HDD 102, and both of the speakers 105.

The controller 101 functions as the host, and controls the HDD 102 and the optical disc drive 103 to write video and audio data received by the TV 104 into the HDD 102 and the DVD-RAM, and, in accordance with video and music data read from the HDD 102 and the DVD-RAM, to have the TV 104 present images on its display and have the speakers 105 output music.

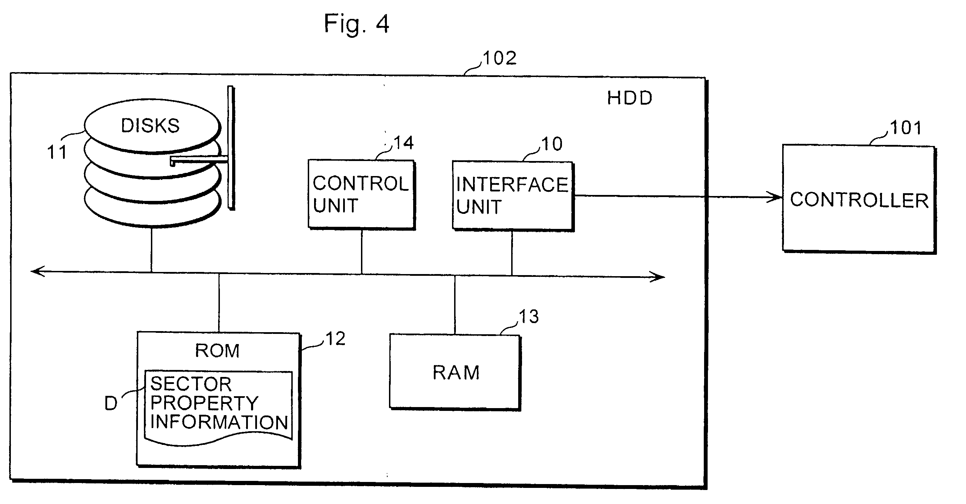

Fig. 4 is a block diagram showing the construction of elements of the HDD 102.

The HDD 102 includes the following elements: an interface unit 10 that functions as an interface with the controller 101 for communication; disks 11 that receives data via the interface unit 10 from the controller 101 and stores the received data up to, for instance, 30 gigabytes (GB); a ROM unit 12 that stores sector property information relating to sectors of the HDD 102; a RAM unit 13 that temporarily stores information; and the control unit 14 that controls the interface unit 10, the disks 11, the ROM unit 12, and the RAM unit 13.

This HDD 102 is for the use in the PC environment, and the disks 11 are divided into a plurality of 512-byte sectors like the conventional HDD. On receiving from the controller 101 a command requesting data transfer, the control unit 14 of the HDD 102 writes/reads data onto/from the disks 11 by a number of sectors that is designated by the command.

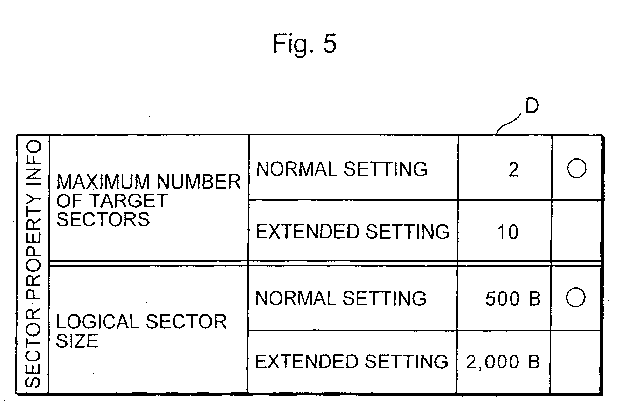

Fig. 5 is a table showing contents of the sector property information D of the present embodiment

This sector property information D includes the following: information showing whether it is possible to extend a maximum number of transfer-target sectors (hereafter called "target sectors") of the disks 11 from/to which a read/write is performed in response to the above command from the controller 101; information showing whether the maximum number of target sectors is currently set as being extended; information showing whether it is allowed to logically extend a physical sector size of the disks 11; and information showing whether this sector size is currently set as being logically extended. To "logically extend" a sector size means to extend a sector size perceived by the control unit 14 by regarding a plurality of physically defined sectors as a single sector. Hereafter, such sector size perceived by the control unit 14 is called a "logical sector size".

The sector property information D in Fig. 5, for instance, shows that the maximum number of target sectors is "2" in the normal setting, that the maximum number can be extended up to "10", and that this maximum number is currently set as the normal setting "2" as indicated by a circle. The sector property information D also shows that the logical sector size is equal to a physical sector size of 500 bytes in the normal setting, that this sector size can be extended up to 2,000 bytes, and that the sector size is currently set as the normal setting of 500 bytes as indicated by a circle.

Before transferring data to/from the HDD 102, the controller 101 of the present embodiment inquires the HDD 102 about the sector property information D, and judges whether the present maximum number of target sectors and the present logical sector size need to be extended in view of a size of data to be transferred. If so, the controller 101 changes these settings of the sector property information D, thereby updating the property information D. The controller 101 then designates a number of sectors which does not exceed the set maximum number of target sectors, and issues a command that requests the HDD 102 to transfer data by the designated number of sectors. The controller 101 thus transfers data to/from the HDD 102.

On the other hand, the control unit 14 of the HDD 102 of the present embodiment writes/reads data onto/from the disks 11 in accordance with the settings of the maximum number of target sectors and the logical sector size shown in the sector property information D. For example, when the maximum number of target sectors is extended to ten, the control unit 14 writes data into ten sectors at most in response to the above single command from the controller 101. When the logical sector size is extended to 2,000 bytes, the control unit 14 regards one logical sector size as 2,000 bytes, considering four sectors as a single sector, and writes data into sectors whose number is designated by the controller 101. That is to say, the HDD 102 of the present embodiment extends the maximum number of target sectors and the logical sector size in accordance with a command from the controller 101.

The HDD 102 and the controller 101 thus change the settings of the sector property information D by extending the maximum number of target sectors and the logical sector size when transferring a large amount of data between them. This reduces a command overhead involved by a read/write of data from/onto the disks 11, and shortens the time required for transferring a large amount of data, thereby enhancing data transfer efficiency.

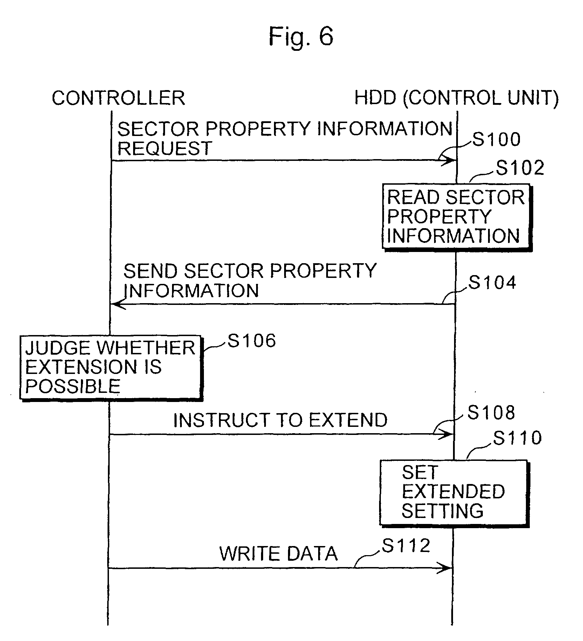

The following describes operation performed when the controller 101 writes data into the HDD 102 with reference to Fig. 6.

Fig. 6 is a sequence diagram showing the operation for the controller 101 to write data into the HDD 102.

The controller 101 as the host requests the HDD 102 to send the sector property information D (step S100).

The control unit 14 of the HDD 102 receives this request via the interface unit 10, reads the sector property information D from the ROM unit 12 (step S102), and sends it to the controller 101 (step S104). Note that the sector property information D is read from the ROM unit 12 only when the property information D has not been read from the ROM unit 12 since the HDD 102 is turned on. Once such read is performed, the sector property information D is placed into the RAM unit 13, and therefore read from the RAM unit 13.

On receiving the sector property information D from the HDD 102, the controller 101 recognizes the present maximum number of target sectors and logical sector size, and judges whether at least one of the recognized maximum number and logical sector size is extensible (step S106). When the controller 101 judges that the present maximum number (e.g., two) of target sectors is too small for the amount of data it is to transfer and that the maximum number is extensible, the controller 101 instructs the HDD 102 to extend the maximum number. At the same time, when judging that the present logical sector size (e.g., 500 bytes) is too small for the amount of data it is to transfer and that the logical sector size is extensible, the controller 101 instructs the HDD 102 to extend the logical sector size (step S108).

When instructed to extend the maximum number of target sectors, the control unit 14 of the HDD 102 changes the maximum number set in the sector property information D from "2" to "10", for instance, and places the changed sector property information D into the RAM unit 13. When instructed to extend the logical sector size, the control unit 14 of the HDD 102 changes the logical sector size in the sector property information D from "500 bytes" to "2,000 bytes", for instance, and places the changed sector property information D into the RAM unit 13. Consequently, at least one of the maximum number of target sectors and the logical sector size has been extended (step S110).

After this, the controller 101 issues a write command which designates a number of write sectors that does not exceed the above maximum number to the HDD 102 to write data, and sends the data. The control unit 14 of the HDD 102 then writes the data sent from the controller 101 into the disks 11 by the designated number of sectors (step S112).

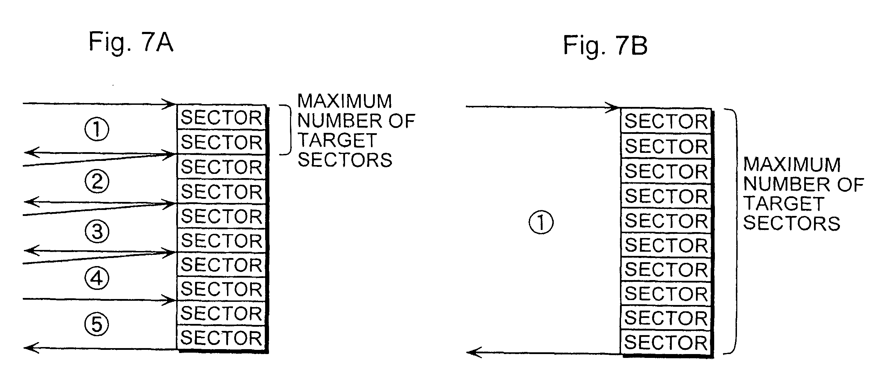

Figs. 7A and 7B are diagrams showing a state in which data is written into the HDD 102 in accordance with extension of the maximum number of target sectors. Figs. 7A and 7B show states in which the maximum number of target sectors is "2" and "10", respectively.

When transferring 5,000-byte data to the HDD 102 with the maximum number of target sectors set as "2" and the logical sector size as "500 bytes", the controller 101 needs to issue a write command five times, as shown in Fig. 7A. When the maximum number of target sectors is extended to "10", however, the controller 101 can reduce the number of command issuances to once as shown in Fig. 7B.

In this way, extending the maximum number of target sectors reduces the number of command issuances by the controller 101 to the HDD 102 so that data transfer time can be shortened.

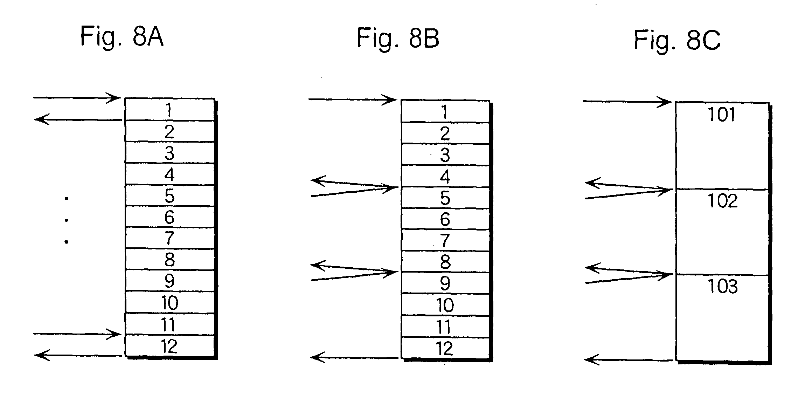

Figs. 8A ∼ 8C are diagrams showing states in which data is written into the HDD 102 with the setting of the logical sector size extended. Fig. 8A shows a state in which the logical sector size is set as 500 bytes, and Fig. 8B shows a state in which the logical sector size is set as four times as large as 500 bytes, that is, 2,000 bytes.

When transferring 6,000-byte data to the HDD 102 as in the above example, with the maximum number of target sectors set as "1" and the logical sector size as "500 bytes", the controller 101 needs to issue a write command twelve times as shown in Fig. 8A. When the logical sector size is extended to 2,000 bytes, however, the number of command issuances by the controller 101 can be reduced to three times as shown in Fig. 8B.

In this way, extending the logical sector size also reduces the number of command issuances by the controller 101 to the HDD 102, so that the data transfer time can be shortened.

Each time the controller 101 issues a write command with the logical sector size not extended as shown in Fig. 8A, the controller 101 designates a sector address of the disks 11, on which the write is performed, as "1", "2", "3"... . When the logical sector size is extended as shown in Fig. 8B, however, designating a sector address in the same way as the above case of an un-extended logical sector size results in designating an incorrect address.

Accordingly, in accordance with a ratio of extension of the logical sector size, the control unit 14 of the HDD 102 converts an address designated by the controller 101. For instance, when the controller 101 makes a request for a write starting with a sector having an address "2" with the logical sector size un-extended, the control unit 14 of the HDD 102 performs the write starting with the sector with the address "2". When the logical sector size is extended fourfold, on the other hand, the control unit 14 converts the designated address "2" into an address "5" based on the above extension ratio, and performs the write starting with a sector with the address "5".

This address conversion by the control unit 14 of the HDD 102 prevents incorrect address from being designated and also saves the controller 101 from having to perform complicated operation such as address conversion in accordance with the logical sector size extension. In addition, the controller 101 is allowed to designate a sector address of the HDD 102 in the most convenient way for the controller 101. For instance, the controller 101 designates addresses "101", "102", and "103" and issues write commands accordingly as shown in Fig. 8C. The control unit 14 of the HDD 102 then performs writes starting with sectors having addresses "1", "5", and "9".

Note that it is also possible to perform such data transfer between the HDD 102 and the controller 101 of the present embodiment in accordance with the ATA standard.

In this case, the ROM unit 12 stores device information D1 regarding the HDD 102, and this device information D1 includes the above sector property information D.

The following describes a case in which the maximum number of target sectors is extended.

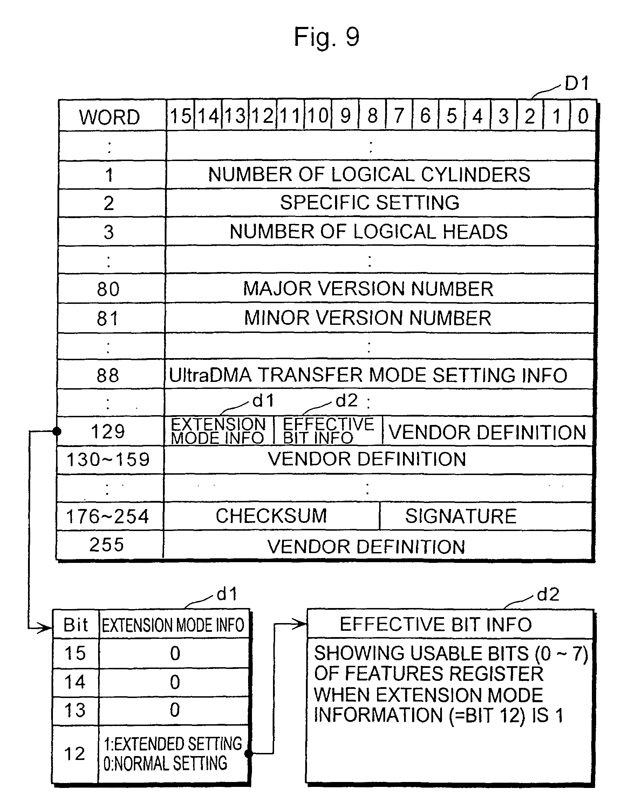

Fig. 9 is a table showing the device information D1 that includes the sector property information D relating to the maximum number of target sectors.

As shown in the figure, this device information D1 includes the following information:(a) effective bit information d2 entered in bits "8" ∼ "11" of a word "129" to show whether the maximum number of target sectors is extensible and the maximum number of target sectors; and (b) extension mode information d1 entered in bits "12" to "15" of the word "129" to show whether the maximum number of target sectors is now set as being extended.

That is to say, in addition to information like the conventional ATA device information such as that concerning a number of logical cylinders, specific setting, a major version number, a minor version number, and UltraDMA transfer mode setting, the present device information D1 includes the above extension mode information d1 and effective bit information d2 as the sector property information D in the eight bits of the word "129", which was conventionally used for vender definition.

The controller 101 requests and obtains this device information D1, and judges from the effective bit information d2 of the obtained device information D1 whether the maximum number of target sectors is extensible. If so, the controller 101 specifies an extensible range of the maximum number, and judges from the extension mode information d1 whether the maximum number is currently set as being extended. When the maximum number of target sectors needs to be extended, the controller 101 issues a device setting command (SET_FEATURES command) to instruct the HDD 102 to extend the maximum number. When issuing a command to transfer data, the controller 101 designates a number of target sectors that does not exceed the extended maximum number.

On receiving the above extension instruction, the control unit 14 of the HDD 102 changes the setting of the extension mode information d1 in the device information D1. On receiving from the controller 101 the command to transfer data, the HDD 102 transfers data to/from target sectors whose total number is designated by the controller 101 extending the maximum number of target sectors within a range indicated by the effective bit information d2 in the device information D1.

More specifically, the maximum number of target sectors of the HDD 102 is set as being not extended when the bit "12" of the extension mode information d1 is "0". The maximum number is set as being extended when the bit "12" of the extension mode information d1 is "1". On the other hand, the effective bit information d2 in which a parameter "0000" is set indicates that the maximum number of target sectors is inextensible. The effective bit information d2 in which a parameter "0001" is set indicates that the maximum number of target sectors is extensible to twice the normal setting, and the information d2 with a parameter "0100" indicates that the maximum number is extensible to sixteen times the normal setting.

For instance, before writing data into the HDD 102, the controller 101 refers to the effective bit information d2 of the obtained device information D1. If the parameter set in the effective bit information d2 is "0000", the controller 101 judges that the maximum number of target sectors is inextensible and therefore cannot instruct the HDD 102 to extend the maximum number by issuing the device setting command. The controller 101 therefore issues a write command (WRITE_SECTORS command = 30h) with the bit "12" of the extension mode information d1 set as "0", so that a SECTOR_COUNT register of the write command designates a number of write sectors within a range of the maximum number of target sectors under the normal setting.

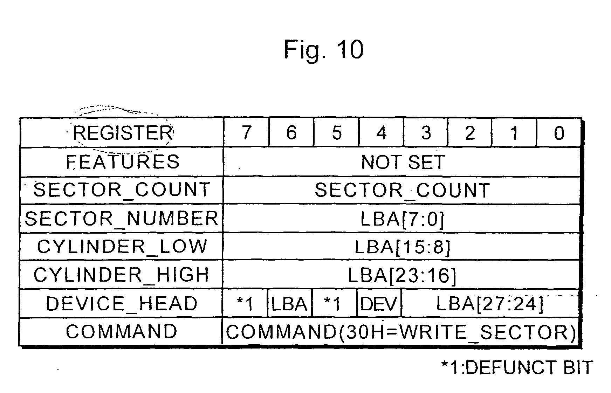

Fig. 10 is a diagram showing contents of the write command (WRITE_SECTORS command) conforming to the ATA standard.

As shown in the figure, this write command is 7 bits long. In a COMMAND register, a command code (30h = WRITE_SECTOR) is set. A write location (Logical Block Address (LBA)) within the disks 11 is represented by 28 bits consisting of: (a) respective 8 bits of a SECTOR_NUMBER register, a CYLINDER_LOW register, and a CYLINDER_HIGH register; and (b) lower 4 bits of a DEVICE_HEAD register. The number of write sectors is represented by 8 bits of the above SECTOR_COUNT register.

That is to say, when the controller 101 do not give an extension command (i.e., in the case of the normal setting) as described above and sends the write command to the control unit 14 of the HDD 102, the control unit 14 only interprets the parameter in the 8-bit SECTOR_COUNT register as the number of write sectors. Accordingly, when the bit "12" of the extension mode information d1 is "0", the controller 101 cannot designate a number of write sectors that exceeds "255". The maximum number of target sectors of the HDD 102 is thus limited to "225".

On the other hand, when obtaining the device information D1 that includes the effective bit information d2 shown as "0100", the controller 101 judges that 4 bits of the FEATURES register as well as bits of the SECTOR_COUNT register of the write command can be used for designating a number of write sectors. That is to say, a parameter in the effective bit information d2 indicates a bit length of the FEATURES register that can be used for designating a number of write sectors. After this, the controller 101 refers to the bit "12" of the extension mode information d1 of the device information D1. When the bit "12" is "0", the controller 101 judges that the HDD 102 has not extended the maximum number of target sectors. When the controller 101 further judges that the present maximum number of target sectors, "255", is too small for the amount of data to be written into the HDD 102, the controller 101 instructs the HDD 102 to extend the maximum number of target sectors by issuing the device setting command. The control unit 14 of the HDD 102 then sets the bit "12" of the extension mode information d1 as "1". Consequently, on receiving a write command from the controller 101, the control unit 14 of the HDD 102 regards, as a number of write sectors, a parameter represented by 12 bits that consist of bits "0" ∼ "3" of the FEATURES register and bits "0" ∼ "7" of the SECTOR_COUNT register in accordance with the extension mode information d1 and effective bit information d2 in the device information D1. That is to say, as the control unit 14 reads the number of write sectors that is represented by 12 bits, the maximum number of target sectors is extended to "4,096".

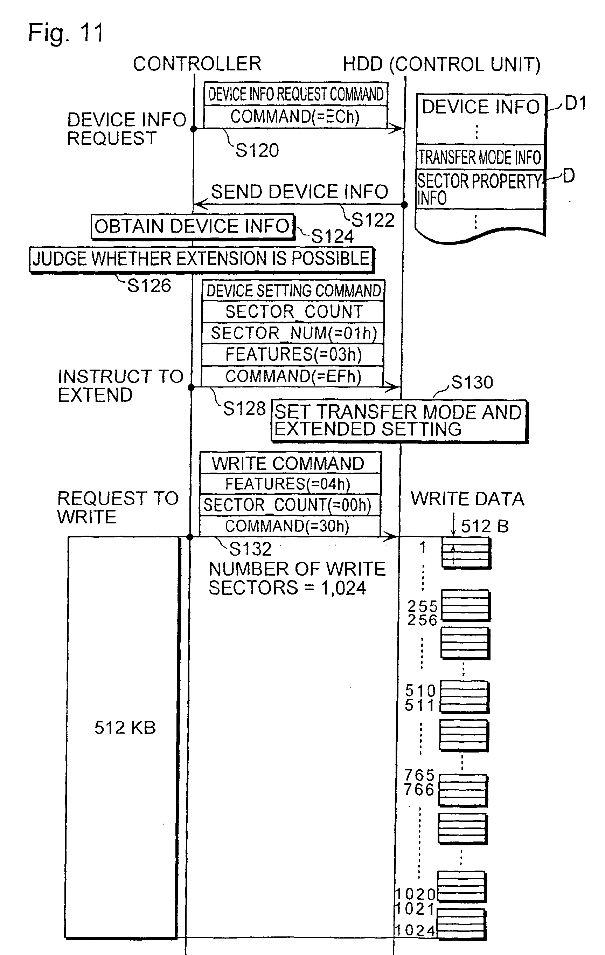

The following describes the flow of operation to extend the maximum number of target sectors and transfer data from the controller 101 to the HDD 102 with reference to Fig. 11.

Fig. 11 is a sequence diagram showing the operation to transfer data from the controller 101 to the HDD 102.

The controller 101 issues a device information request command (IDENTITY DEVICE command = ECh) requesting the device information D1 to the HDD 102 (step S120).

On receiving this device information request command, the control unit 14 of the HDD 102 reads the device information D1 from either the ROM unit 12 or the RAM unit 13, and sends the read device information D1 to the controller 101 (step S122).

The controller 101 receives this device information D1 (step S124), specifies a transfer mode that can be set for the transfer between the controller 101 and the HDD 102 by referring to the transfer mode information in the device information D1. The controller 101 also specifies the currently set maximum number of target sectors of the HDD 102 by referring to the sector property information D in the device information D1. The controller 101 then judges whether this maximum number of target sectors is extensible (step S126).

When the controller 101 judges that the present maximum number of target sectors, "255", is too small for 512-KB data that the controller 101 is to write into the HDD 102, the controller 101 issues the device setting command (SET_FEATURES command = EFh) that instructs the HDD 102 to extend the maximum number of target sectors (step S128).

This device setting command instructs the HDD 102 to not only extend the maximum number of target sectors but also set the transfer mode specified above. In this device setting command, the following data is set in the following registers: (a) a subcode ("03h") showing that the transfer mode is designated set in the FEATURES register; (b) a parameter showing the designated transfer mode set in the SECTOR_COUNT register; and (c) a parameter ("01h") instructing to extend the maximum number of target sectors set in the SECTOR_NUMBER register.

In response to the above device setting command, the control unit 14 of the HDD 102 sets the transfer mode specified by the controller 101 in a word "88" of the device information D1, and updates the bit "12" of the extension mode information d1 within the device information D1 from "0" to "1". The control unit 14 places the updated device information D1 into the RAM unit 13 so that the maximum number of target sectors has been extended (step S130). When "0100" is set in the effective bit information d2 of the device information D1, the control unit 14 of the HDD 102 interprets, as a number of write sectors, a parameter represented by 12 bits consisting of the bits "0" ∼ "3" of the FEATURES register and the bits "0" ∼ "7" of the SECTOR_COUNT register within the write command sent from the controller 101. The maximum number of target sectors is therefore extended to "4,096".

After this, the controller 101 issues the write command (WRITE_SECTORS command = 30h) to make a request for a write to the HDD 102, and the HDD 102 receives this request and performs the write (step S132).

Here, the controller 101 is aware that the number of write sectors can be designated by 12 bits that consist of the bits "0" ∼ "3" of the FEATURES register and the bits "0" ∼ "7" of the SECTOR_COUNT register of the write command. In accordance with the amount of data to be transferred to the HDD 102, the controller 101 sets "04h" as a parameter in the FEATURES register, and sets "00h" as a parameter in the SECTOR _COUNT register of the above write command.

Consequently, from the above parameters, the control unit 14 of the HDD 102 interprets that the number of write sectors is designated as "1024", and performs the write into 1,024 sectors of the disks 11. As a size of each sector of the disks 11 is 512 bytes, 512-KB data (1,024 sectors × 512 bytes) is written into the disks 11 through this write.

In this way, in the present embodiment, 512-KB data transfer to the HDD 102 requires only one command issuance although transfer of the same amount of data conventionally requires five command issuances.

The following describes a case in which the maximum number of target sectors and the logical sector size are extended.

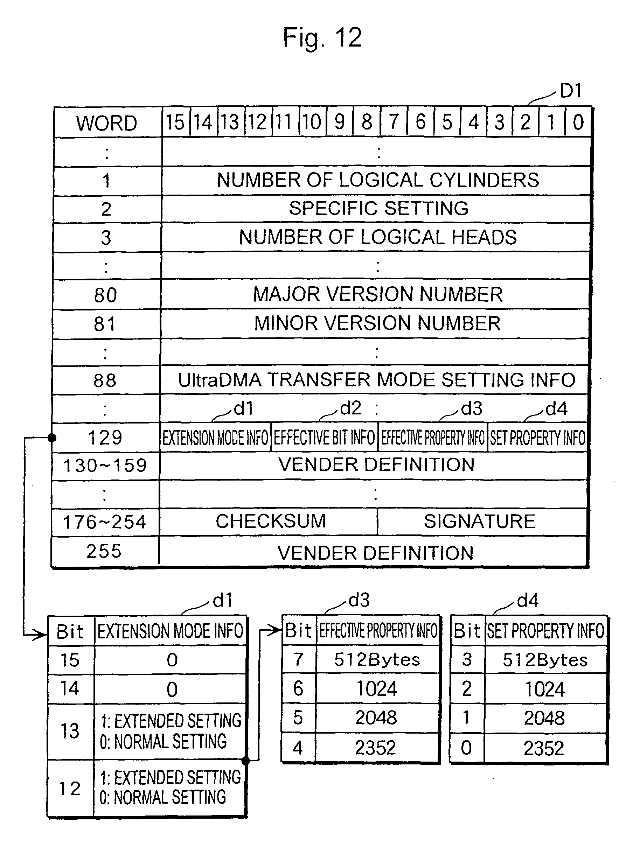

Fig. 12 is a table showing device information D1 that includes sector property information D relating to both the maximum number of target sectors and logical sector size.

As shown in the figure, this device information D1 includes the following information: (a) effective property information d3 entered in bits "4" ∼ "7" of the word "129" to show whether the logical sector size is extensible, and the extensible logical sector size; (b) set property information d4 entered in bits from "0" to "3" of the word "129" to show a logical sector size to be set; and (c) the aforementioned extension mode information d1 which additionally includes information showing whether a logical sector size is currently extended to the sector size shown in the set property information d4.

This device information D1 includes, in 8 bits of the word "129" conventionally used for vendor definition, the following information as the sector property information D: the extension mode information d1; the effective bit information d2; the effective property information d3; and the set property information d4.

The controller 101 requests and obtains this device information D1, and judges from the effective property information d3 in the obtained device information D1 whether the logical sector size is extensible. If so, the controller 101 specifies an extensible range of the logical sector size, and also specifies a currently set logical sector size by referring to the set property information d4 and the extension mode information d1. When the logical sector size needs to be extended, the controller 101 instructs the HDD 102 to extend the logical sector size by issuing a device setting command (SET_FEATURES command). On receiving this extension instruction, the control unit 14 of the HDD 102 changes the setting of the extension mode information d1 if the present setting is not the extended setting. The control unit 14 also changes the set property information d4 to make it show a logical sector size in accordance with the above extension instruction. Consequently, on receiving a data transfer command from the controller 101, the control unit 14 transfers data by the logical sector size shown in the set property information d4 in the device information D1 to a number of sectors that is designated by the controller 101.

More specifically, for the HDD 102, when a bit "13" of the extension mode information d1 is "0", the logical sector size is then set as being not extended, that is, being equal to the physical sector size (i.e., the normal setting). When the bit "13" of the extension mode information d1 is "1", the logical sector size is extended from the physical sector size. The effective property information d3 represented by bits "4" ∼ "7" shows the following. When the bit "7" alone is "1", the effective property information d3 shows that the logical sector size is equal to the physical sector size, that is, 512 bytes and that the logical sector size is inextensible. On the other hand, when both bits "6" and "7" are "1", the effective property information d3 shows that the logical sector size is extensible up to 1,024 bytes. When bits "5", "6", and "7" are "1", the logical sector size is extensible up to either 1,024 or 2,048 bytes. When the bits from "4" to "7 " are all "1", the logical sector size is extensible up to 1,024, 2,048, or 2,352 bytes. When the bits from "4" to "7" are all "1" in this way, bits from "0" to "3" showing the set property information d4 indicate the following. When a bit "0" of the set property information d4 alone is "1", the logical sector size is extended to 2,353 bytes in accordance with a value of the bit "13" of the extension mode information d1. When a bit "1" of the set property information d4 alone is "1", the logical sector size is extended to 2,048 bytes in accordance with a value of the bit "13" of the extension mode information d1.

For instance, before writing data into the HDD 102, the controller 101 refers to the obtained device information D1. When only the bit "7" of the effective property information d3 is "1" in the obtained device information D1, the controller 101 judges that the logical sector size is inextensible.

On the other hand, when the bits from "5" to "7" of the effective property information d3 in the obtained device information D1 are all "1" and the bit "13" of the effective mode information d1 is "0", then the controller 101 judges that the logical sector size is currently set as 512 bytes but it can be extended up to either 1,024 bytes or 2,048 bytes. After this, if the controller 101 judges that the present logical sector size, 512 bytes, is too small for the amount of data the controller 101 is to write into the HDD 102, the controller 101 instructs the HDD 102 to extend the logical sector size by issuing the device setting command. The control unit 14 of the HDD 102 then sets "1" in the bit "13" of the extension mode information d1, and also sets "1" only in the bit "1" of the set property information d4. Consequently, when receiving a write command from the controller 101, the control unit 14 of the HDD 102 interprets the logical sector size as 2,048 bytes in accordance with the extension mode information d1 and the set property information d4 of the above device information D1. The control unit 14 then writes, into the disks 11, data with a size of 2,048 bytes multiplied by a number of sectors that is designated by the above write command.

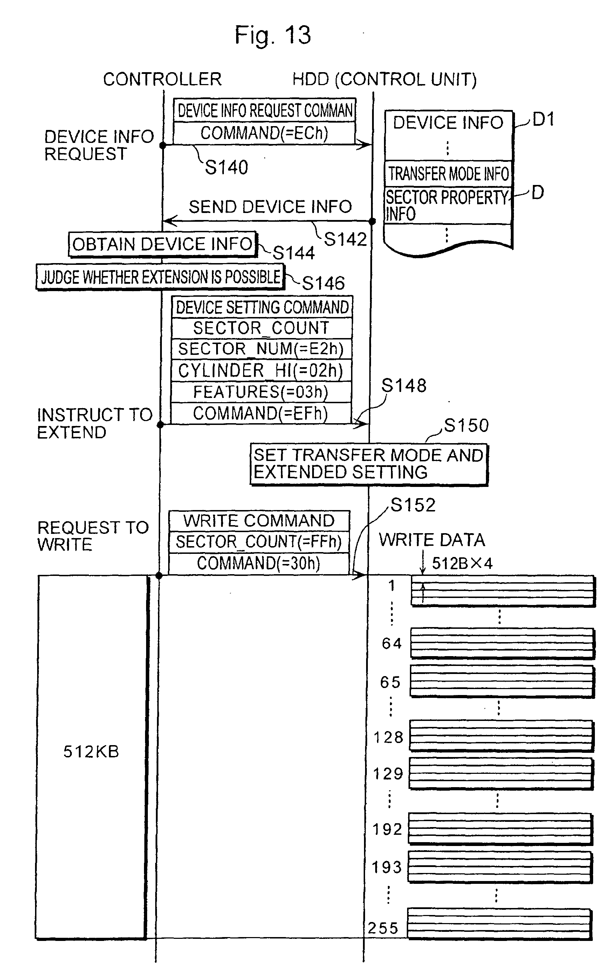

The following describes the flow of operation to extend the logical sector size and transfer data from the controller 101 to the HDD 102 with reference to Fig. 13.

Fig. 13 is a sequence diagram showing the operation to transfer data from the controller 101 to the HDD 102.

Here, assume that the device information D1 of the HDD 102 includes the following: (a) the extension mode information d1 made up of bits from "12" to "15" in all of which "0" is set; (b) the effective property information d3 made up of bits from "4" to "7" in all of which "1" is set; and (c) the set property information d4 made up of bits from "0" to "3" out of which the bit "3" alone is set as "1". That is to say, for this HDD 102, the logical sector size is extensible to 1,024, 2,048, or 2,352 bytes, and the logical sector size is set as 512 bytes in the initial state, that is, the extended setting is not set, and the physical sector size is used for the subsequent operation.

The controller 101 issues a device information request command (IDENTITY DEVICE command = ECh) that makes a request for the device info100rmation D1 to the HDD 102 (step S140).

On receiving this device information request command, the control unit 14 of the HDD 102 reads the device information D1 from either the ROM unit 12 or the RAM unit 13, and sends the read device information D1 to the controller 101 (step S142).

The controller 101 obtains this device information D1 (step S144), and specifies a transfer mode that can be set for data transfer between the controller 101 and the HDD 102 by referring to the transfer mode information in the device information D1. The controller 101 also refers to the extension mode information d1, the effective property information d3, and the set property information d4 within the device information D1 to specify the currently set logical sector size of the HDD 102 and judge whether the logical sector size is extensible (step S146).

When the controller 101 judges that the currently set logical sector size of the HDD 102 is too small for 512-KB data that the controller 101 is to transfer to the HDD 102, the controller 101 issues the device setting command (SET_FEATURES command = EFh) to the HDD 102. This device setting command instructs the HDD 102 to extend the logical sector size, designates a logical sector size to which the current sector size should be extended, and contains information showing the transfer mode specified as described above (step S148).

This device setting command includes the following parameters in the following registers: a subcode ("03h") showing that the transfer mode is designated in the FEATURES register; a parameter showing the designated transfer mode in the SECTOR_COUNT register; a parameter ("02h") instructing to extend the logical sector size in the CYLINDER_HIGH register; and a parameter ("E2h") showing the logical sector size to which the present sector size should be extended in the SECTOR_NUMBER register.

In response to this device setting command, the control unit 14 of the HDD 102 sets, in the word "88" of the device information D1, the transfer mode designated by the controller 101, updates the bit "13" of the extension mode information d1 within the device information D1 from "0" to "1", and also updates the bits "3" and "1" of the set property information d4 from "1" to "0" and from "0" to "1", respectively. After updating the device information D1 in this way, the control unit 14 places the updated device information D1 into the RAM unit 13 so that the setting of the logical sector size has been extended (step S150).

Consequently, the HDD 102 is set to handle four sectors of the disks 11 as a single sector, and the logical sector size is extended from 512 bytes to 2,048 bytes.

After this, the controller 101 issues a write command (WRITE_SECTORS command = 30h), as in step S850 shown in Fig. 2, to request the HDD 102 to perform a write, and the HDD 102 receives this request and performs the write (step S152).

The above write command includes a parameter "FFh" in the SECTOR_COUNT register, and therefore the control unit 14 of the HDD 102 interprets a number of write sectors as "255" and performs the above write into 255 sectors.

As the logical sector size of the disc 11 is extended to 2,048 bytes, the control unit 14 of the HDD 102 writes 512-KB data at most into the disks 11 in response to the above one write command.

As in the case in which the maximum number of target sectors is extended, the present embodiment is capable of reducing a number of command issuances from conventionally required five times to only once by extending the logical sector size.

The following describes operations performed by the controller 101 and the HDD 102 after the controller 101 sends a write command like the above.

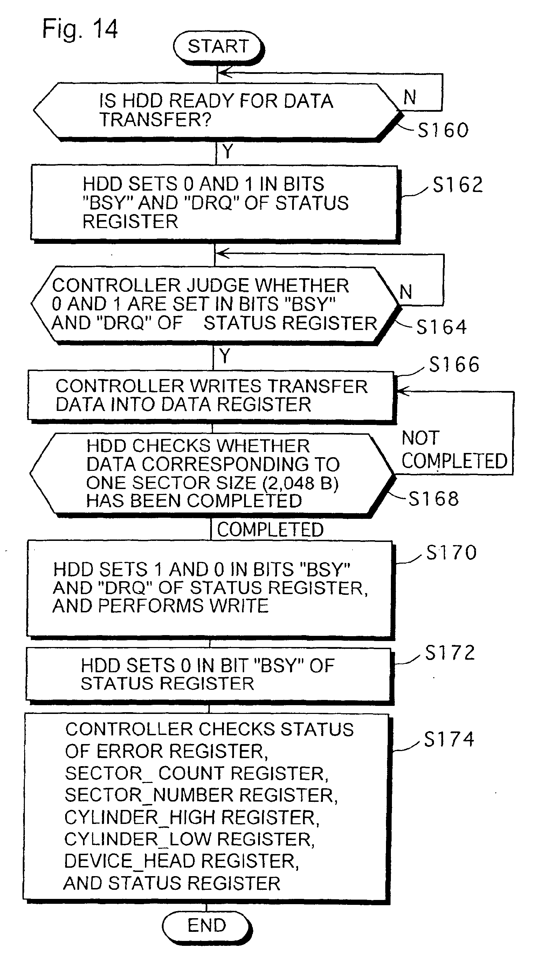

Fig. 14 is a flowchart showing the operations performed by the controller 101 and the HDD 102 to write data with a logical sector size into the HDD 102 after the write command is sent.

The control unit 14 of the HDD 102 prepares for a write into the disks 11 (step S160).

When the preparation for the write is completed (i.e., "yes (Y)" is selected in step S160), the control unit 14 of the HDD 102 sets "0" and "1" in bits "BSY" and "DRQ", respectively, of a STATUS register (step S162).

The controller 101 refers to the above STATUS register, recognizes that the preparation by the HDD 102 is completed (i.e., "Y" is selected in step S164), and writes, into a DATA register, data to transfer (step S166).

When judging that the data with the logical sector size has been transferred (step S168), the control unit 14 of the HDD 102 sets "1" and "0" in the bits "BSY" and "DRQ" of the STATUS register, and writes the data into the disks 11 (step S170). On completion of this write, the control unit 14 sets "0" in the bit "BSY" of the STATUS register (step S172).

When the bit "BSY" has changed to "0" in this way, the controller 101 reads the STATUS register to check the write is performed without errors (step S174).

It is also possible to perform data transfer between the optical disc drive 103 and the controller 101 in accordance with the ATAPI standard instead of the ATA standard. That is to say, the controller 101 may select one of the ATA standard and the ATAPI standard to control the HDD 102 and the optical disc drive 103.

The following describes difference between the ATA standard and the ATAPI standard.

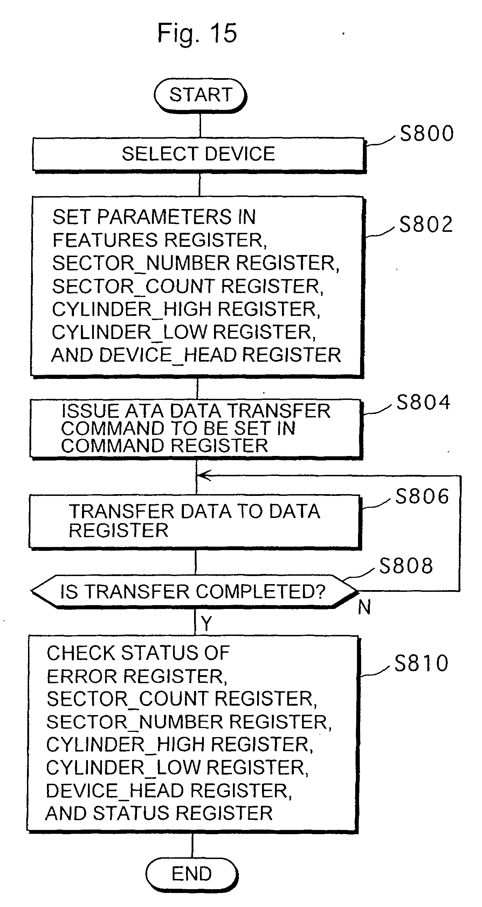

Fig. 15 is a flowchart showing the procedure of standard ATA data transfer between a host and a device.

The host selects a device to/from which data should be transferred (step S800).

The host sets parameters in registers such as the FEATURES register, the SECTOR_NUMBER register, the SECTOR_COUNT register, the CYLINDER_HIGH register, the CYLINDER_LOW register, and the DEVICE_HEAD register (step S802).

The host issues a data transfer command (step S804), and transfers data to/from the device (step S806).

After the transfer is completed (step S808), the host checks whether the transfer is completed without errors by referring to the ERROR register, the SELECTOR_NUMBER register, the SECTOR_COUNT register, the CYLINDER_HIGH register, the CYLINDER_LOW register, the DEVICE_HEAD register, and the STATUS register (step S810).

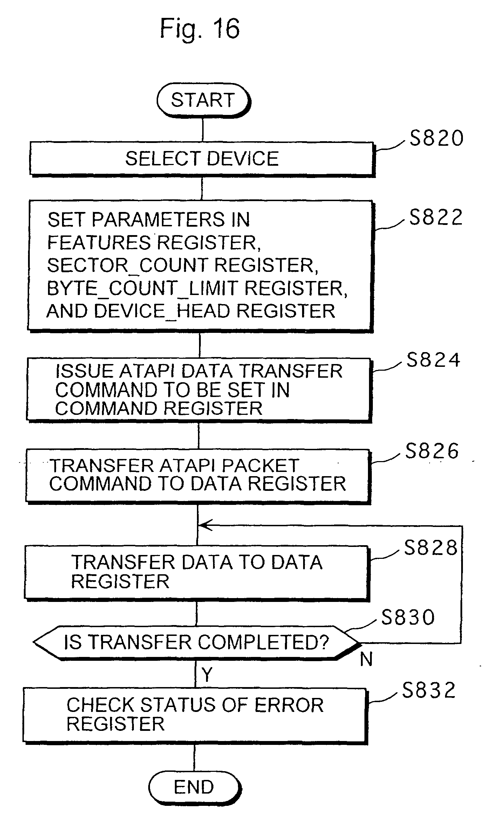

Fig. 16 is a flowchart showing the procedure of standard ATAPI data transfer performed between a host and a device.

As in the above case of the ATA transfer, the host selects a device to/from which data should be transferred (step S820).

The host sets parameters in registers such as the FEATURES register, the SECTOR_COUNT register, the BYTE_COUNT_LIMIT register, and the DEVICE_HEAD register (step S822).

The host then issues a data transfer command (step S824), writes a command packet in the DATA register (step S826), and transfers data to/from the device (step S828).

After the transfer is completed (step S830), the host checks whether the transfer is completed without errors by referring to the ERROR register (step 5832).

As is clear from the above description, the above two standards require different registers in some cases.

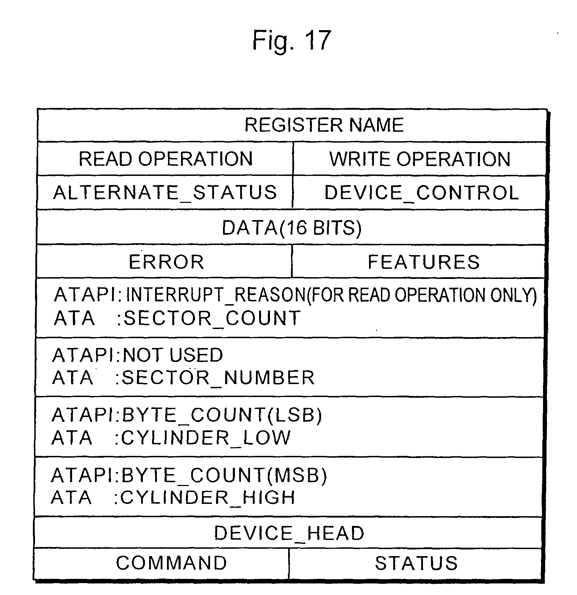

Fig. 17 shows comparison of registers used by a read and a write conforming to the ATA and ATAPI standards.

As shown in the figure, both the standards require the DATA register and the DEVICE_HEAD register when a read/write is performed. On the other hand, the two standards require different registers. That is to say, the ATAPI standard requires INTERRUPT_REASON, BYTE_COUNT (LSB), and BYTE_COUNT (MSB) registers, while the ATA standard requires the SECTOR_COUNT, SECTOR_NUMBER, CYLINDER_LOW, and CYLINDER_HIGH registers. Also, reads according to both the standards require ALTERNATE_STATUS, ERROR, and COMMAND registers, while writes according to the two standards require DEVICE_CONTROL, FEATURES, and STATUS registers. In this way, a read and a write require different registers.

The ATA and ATAPI standards thus differ from each other and require write commands having different contents, although the two standards use basically the same registers and transfer procedure.

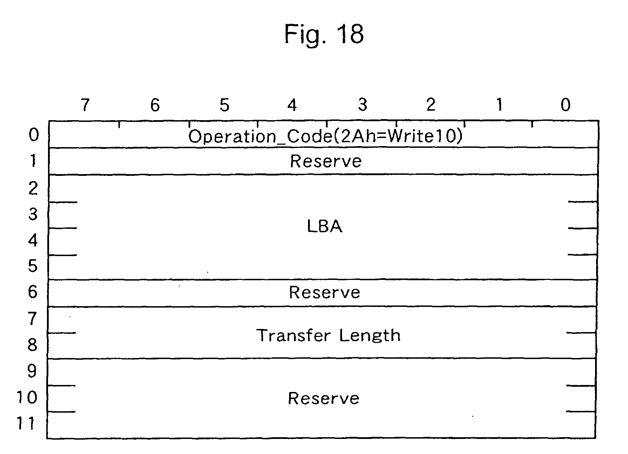

Fig. 18 shows contents of a write command (WRITE10 command) conforming to the ATAPI standard.

As shown in the figure, the ATAPI write command is 12 bytes long and includes the following information: "Operation_Code" (2Ah = WRITE10) shown in a word "0"; a write location (LBA) within a medium represented by 32 bits and shown in words from "2" to "5"; and a number of write sectors ("Transfer Length") represented by 16 bits and shown in words "7" and "8".

As can be seen by comparing the ATAPI write command shown in this figure and the ATA write command shown in Fig. 10, bit lengths used to show the number of write sectors and the LBA differ between the two write commands. Accordingly, when the host performs ATA transfer to/from one drive and ATAPI transfer to/from another drive, the host needs to handle the two drives differently in accordance with the two standards, which may complicate the host's control operation. The host's control operation may be further complicated when the two drives use different physical sector sizes.

The present embodiment, however, allows the controller 101 to perform the same simplified operation to control both the HDD 102 and the optical disc drive 103 when the controller 101 performs the ATA transfer to/from the HDD 102 and the ATAPI transfer to/from the optical disc drive 103.

That is to say, extending the logical sector size of the HDD 102 as described above equalizes physical sector sizes differing between the disks 11 of the HDD 102 and the DVD-RAM of the optical disc drive 103. In addition, when the maximum number of target sectors of the HDD 102 is extended, that is, a length of bits representing a number of write sectors in an ATA write command is extended to bits in the FEATURES register, then it becomes possible that write commands issued to the HDD 102 and to the optical disc drive 103 have bits of the same length to show the number of the write sectors.

With the present embodiment, it is also possible to equalize different lengths of bits representing an LBA in write commands issued to the HDD 102 and the optical disc drive 103. This is made possible by setting predetermined information in the device information D1, extending a range of the bits representing the LBA in a write command in accordance with the predetermined information, and having the control unit 14 of the HDD 102 recognize the extended range of bits in a similar way to the case in which the maximum number of target sectors is extended.

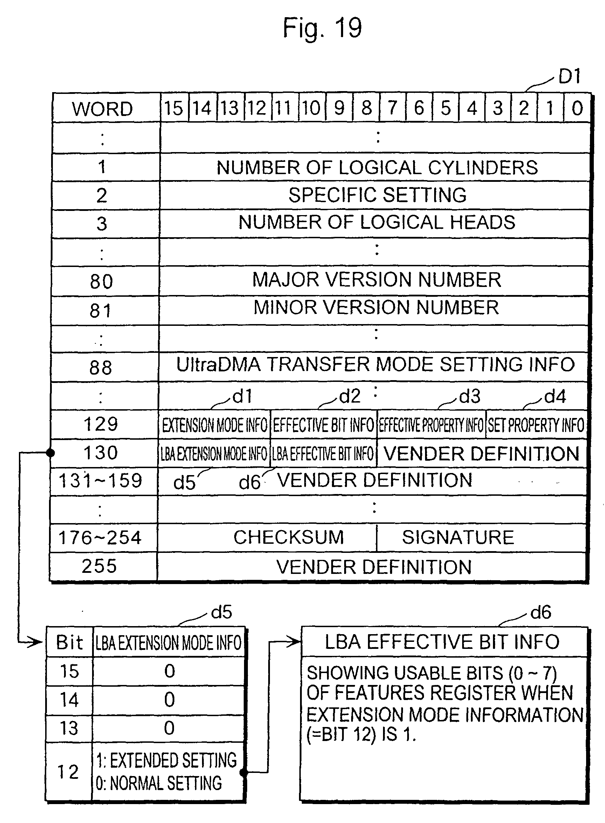

Fig. 19 is a table showing the device information D1 in which the above predetermined information is set.

As shown in the figure, this device information D1 includes the following information: (a) LBA effective bit information d6 entered in bits from "8" to "11" of a word "130" to show whether a range of bits representing an LBA for a write command is extensible and a range of the extensible bits; and (b) LBA extension mode information d5 entered in bits from "12" to "15" of the word "130" to show whether the above range of extensible bits is set to be recognized.

That is to say, the above device information D1 includes, as the aforementioned predetermined information, the LBA extension mode information d5 and the LBA effective bit information d6 in 8 bits of the word "130" that is conventionally used for vendor definition.

The controller 101 requests and obtains this device information D1, and refers to the LBA effective bit information d6 in the device information D1 to judge whether the range of bits representing an LBA is extensible in a write command. If so, the controller 101 specifies the extensible range, and judges from the LBA extension mode information d5 whether the extensible range is currently set to be recognized. When the extensible range should be set to be recognized, the controller 101 issues a device setting command (SET_FEATURES command) to instruct the HDD 102 to extend the range of bits.

On receiving the extension instruction, the control unit 14 of the HDD 102 changes the setting of the LBA extension mode information d5 in the device information D1. When receiving a write command from the controller 101, the control unit 14 interprets the range extended by a bit length shown in the LBA effective bit information d6 as a range of bits representing the LBA, and performs a write into sectors corresponding to this LBA.

More specifically, when the bit "12" of the LBA extension mode information d5 is "0", the bits representing the LBA are set as being not extended (i.e., normal setting). When the bit "12" of the LBA extension mode information d5 is "1", the bits representing the LBA are set as being extended (i.e., the extended setting). When a parameter "0000" is set in the LBA effective bit information d6, this effective bit information d6 shows that a length of bits representing the LBA is inextensible. The LBA effective bit information d6 in which a parameter "0001" is set shows that a length of bits representing the LBA is extensible from the normal setting of 28 bits by only one bit. The LBA effective bit information d6 in which a parameter "0100" is set shows that a length of bits representing the LBA is extensible from the normal setting of 28 bits by four bits.

For instance, before writing data into the HDD 102, the controller 101 refers to the LBA effective bit information d6 in the obtained device information D1. If the parameter set in the LBA effective bit information d6 is "0000", the controller 101 judges that the length of the bits representing the LBA is inextensible.

On the other hand, when the parameter "0100" is set in the LBA effective bit information d6 in the obtained device information D1, the controller 101 judges that the LBA can be represented by 4 bits of the FEATURES register of a write command as well as 28 bits consisting of the following bits of the write command: 24 bits of the SECTOR_NUMBER register, the CYLINDER_LOW register, and the CYLINDER_HIGH register; and lower 4 bits of the DEVICE_HEAD register. After this, when the bit "12" of the LBA extension mode information d5 in the device information D1 is "0", the controller 101 changes this to "1".

Consequently, on receiving the write command from the controller 101, the control unit 14 of the HDD 102 refers to the LBA extension mode information d5 and the LBA effective bit information d6 in the above device information D1. The control unit 14 then recognizes, as the LBA, a parameter represented by a total of 32 bits that include 4 bits of the FEATURES register, and writes data into a sector specified by the LBA.

In this way, the present embodiment is capable of extending a range of bits representing an LBA as well as bits representing a maximum number of target sectors and a logical sector size. This allows the controller 101 to perform the same simplified control operation for ATA transfer and ATAPI transfer. In addition, extending a range of bits representing an LBA in this way enables transfer of a large amount of data.

The above embodiments have been used to describe the disk drive device and its control device of the present invention, although it should be clear that the present invention is not limited to these embodiments.

For instance, although the optical disc drive 103 reads/writes data from/onto the DVD-RAM in the above embodiments, the optical disc drive 103 may read/write data from/onto a CD-R/RW (Compact Disc Recordable/Rewritable) and a DVD-R (Digital Versatile Disc-Recordable). The controller 101 may control, instead of the optical disc drive 103, a drive that reads/writes data from/onto a Secure Digital (SD) (a trademark of Toshiba Corporation) memory card, for instance.

In the above embodiments, the sector property information is provided, as a part of the ATA device information, in the words "129" and "130" that are vendor definition areas. However, the sector property information may be provided in other vendor definition areas.

In the above embodiments, the controller 101 instructs the HDD 102 to extend a maximum number of target sectors by using the SECTOR_NUMBER register of the device setting command. However, instead of the SECTOR_NUMBER register, another register may be used for instruction of the extension. Also in the above embodiments, a number of write sectors is designated by the FEATURES register as well as the SECTOR_COUNT register. However, this may be designated by the SECTOR_COUNT register and another register other than the FEATURES register.

### Industrial Applicability

The disk drive device and its control device of the present invention are suitable for use as an auxiliary storage unit for a computer, particularly, an AV-related auxiliary storage unit and as a control device that controls the auxiliary storage unit.

## Claims

1. A disk drive device that transfers data to and from an external device, comprising:
a disk that stores data in units of sectors;
a storing unit operable to store sector information showing an extent to which restrictions on handling of the sectors can be eased for data transfer; and
a control unit operable to send the sector information in response to an inquiry from the external device about the sector information, and transfer data to and from the disk in accordance with a transfer request for transferring data and with an instruction from the external device when the control unit receives the transfer request while in a state of being instructed by the instruction to ease the restrictions.

2. The disk drive device of Claim 1,
wherein when instructed by the instruction from the external device to ease the restrictions, the control-unit sets contents of the instruction in the sector information.

3. The disk drive device of Claim 2,
wherein the sector information shows the extent, to which a number of sectors that can be accessed at a time can be extended, and
the control unit extends the number of sectors when instructed to ease the restrictions.

4. The disk drive device of Claim 3,
wherein the disk drive device transfers data to and from the external device in accordance with Advanced Technology Attachment (ATA), and
the sector information is included in drive information that relates to the disk drive device and that is requested by the external device according to ATA before data transfer is performed.

5. The disk drive device of Claim 4,
wherein the sector information is provided in a word assigned for vender definition in the drive information.

6. The disk drive device of Claim 2,
wherein the sector information shows the extent, to which an original size of each of the sectors can be extended, the extended size being regarded by the control unit as a size of each sector,
the control unit extends the original size of each of the sectors on receiving the transfer request while in a state of being instructed by the external device to ease the restrictions, and thereafter handles, as a sector, a part having the extended size in the disk.

7. The disk drive device of Claim 6,
wherein when receiving the transfer request with a sector address designated while in a state of being instructed to ease the restrictions, the control unit (a) extends the original size of each sector by an integral multiple, (b) handles, as a sector, a plurality of sectors having the extended size, (c) converts the designated address in accordance with the integral multiple, and (d) transfers data to and from sectors specified by the converted address.

8. The disk derive device of Claim 2,
wherein the external device makes the transfer request in which an address is designated, the address being assigned to a sector of the disk,
the sector information shows the extent, to which a range used for designating the address can be extended, and
the control unit extends the range used for designating the address when instructed by the external device to ease the restrictions.

9. A control device that controls a disk drive device, which (a) comprises a disk storing data in units of sectors, (b) stores sector information showing an extent to which restrictions on handling of the sectors can be eased for data transfer, and (c) transfers data to and from the disk in accordance with a transfer request for transferring data and with an instruction on receiving the transfer request while in a state of being instructed by the instruction to ease the restrictions,
wherein the control device makes an inquiry about the sector information to the disk drive device, instructs, in accordance with the sector information, the disk drive device to ease the restrictions, and then makes the transfer request to the disk drive device so as to transfer data to and from the disk drive device.

10. The control device of Claim 9,
wherein the sector information shows the extent, to which a number of sectors that can be accessed at a time can be extended, and,
the control device instructs, in accordance with the extent, the disk drive device to extend the number of sectors.

11. The control device of Claim 10, transferring data to and from the disk drive device in accordance with ATA, and making the inquiry about the sector information to the disk drive device when making a request in accordance with ATA for drive information relating to the disk drive device.

12. A transfer method used for a disk drive device that transfers data to and from an external device and that includes a disk storing data in units of sectors, the transfer method including:
a storing step for storing sector information showing an extent to which restrictions on handling of the sectors can be eased for data transfer;
a sending step for sending the sector information in response to an inquiry from the external device about the sector information;
a receiving step for receiving, from the external device, an instruction to ease the restrictions; and
a transferring step for transferring, when a transfer request for transferring data is received from the external device, data to and from the disk in accordance with the transfer request and the instruction.

13. The transfer method of Claim 12,
wherein in the storing step, the sector information shows the extent, to which a number of sectors that can be accessed at a time can be extended, and
the number of sectors is extended in the receiving step when the instruction to ease the restrictions is received.

14. The transfer method of Claim 12,
wherein in the storing step, the sector information shows the extent, to which an original size of each of the sectors can be extended, the extended size being regarded by a control unit as a size of each sector,
the original size of each of the sectors is extended in the receiving step when the instruction to ease the restrictions is received from the external device, and
a part having the extended size in the disk is handled as a sector in the transferring step.

15. The transfer method of Claim 12,
wherein in the storing step, the sector information shows the extent, to which a range used for designating an address can be extended, the address being assigned to a sector of the disk, the range being used in the transfer request from the external device, and
the range used for designating the address is extended in the receiving step when the instruction to ease the restrictions is received.

16. A control method for controlling a disk drive device that (a) comprises a disk storing data in units of sectors, (b) stores sector information showing an extent to which restrictions on handling of the sectors can be eased for data transfer, and (c) transfers data to and from the disk in accordance with a transfer request for transferring data and with an instruction on receiving the transfer request while in a state of being instructed by the instruction to ease the restrictions, wherein the control method includes:
an inquiry step for making an inquiry about the sector information to the disk drive device;
an instructing step for instructing, in accordance with the sector information, the disk drive device to ease the restrictions;
a requesting step for making the transfer request to the disk drive device after the instructing step; and
a transferring step for transferring data to and from the disk drive device.

17. The control method of Claim 16,
wherein the sector information shows the extent, to which a number of sectors that can be accessed at a time can be extended, and,
the disk drive device is instructed to extend the number of sectors in accordance with the extent in the instructing step.

18. A transfer method for transferring data between a disk drive device and a control device that controls the disk drive device, the disk drive device including a disk that stores data in units of sectors, the transfer method including:
a storing step where the disk drive device stores sector information showing an extent to which restrictions on handling of the sectors can be eased for data transfer;
an inquiry step where the control device makes an inquiry about the sector information to the disk drive device;
a sending step where the disk drive device sends the sector information to the control device in response to the inquiry;
an instructing step where the control device .instructs, in accordance with the sector information, the disk drive device to ease the restrictions;
a receiving step where the disk drive device receives the instruction to ease the restrictions;
a requesting step where the control device makes a transfer request to the disk drive device after the instructing step, the transfer request requesting to transfer data; and
a transferring step where the disk drive device transfers data to and from the disk in accordance with the transfer request and the instruction, so that data is transferred between the control device and the disk drive device.

19. The transfer method of Claim 18,
wherein in the receiving step, the disk drive device sets contents of the instruction in the sector information.

20. The transfer method of Claim 19,
wherein in the storing step, the sector information shows the extent, to which a number of sectors that can be accessed at a time can be extended, and
the disk drive device extends the number of sectors in the receiving step on receiving the instruction.

21. The transfer method of Claim 20, conforming to ATA,
wherein in the inquiry step, the control device makes the inquiry about the sector information to the disk drive device when making a request in accordance with ATA for drive information relating to the disk drive device.

22. The transfer method of Claim 21,
wherein in the storing step, the sector information is provided in a word assigned for vender definition in the drive information.

23. The transfer method of Claim 19,
wherein in the storing step, the sector information shows the extent, to which an original size of each of the sectors can be extended, the extended size being regarded by the disk drive device as a size of each sector,
the disk drive device extends the original size of each of the sectors in the receiving step on receiving the instruction, and
the disk drive device handles a part having the extended size in the disk as a sector in the transferring step.

24. The transfer method of Claim 23,
wherein the disk drive device extends the original size of each sector by an integral multiple in the receiving step on receiving the instruction,
the control device makes the transfer request, in which a sector address is designated, in the requesting step,
the disk drive device handles, as a sector, a plurality of sectors having the extended size, converts the designated address in accordance with the integral multiple, and transfers data to and from sectors specified by the converted address in the transferring step.

25. The transfer method of Claim 19,
wherein in the storing step, the sector information shows the extent, to which a range used for designating an address can be extended, the address being assigned to a sector of the disk, the range being used in the transfer request from the control device, and
the disk drive device extends the range used for designating the address in the receiving step on receiving the instruction.

26. A program for transferring data between a disk drive device and a control device that controls the disk drive device, the disk drive device including a disk that stores data in units of sectors, the program including:
a storing step where the disk drive device stores sector information showing an extent to which restrictions on handling of the sectors can be eased for data transfer;
an inquiry step where the control device makes an inquiry about the sector information to the disk drive device;
a sending step where the disk drive device sends the sector information to the control device in response to the inquiry;
an instructing step where the control device instructs, in accordance with the sector information, the disk drive device to ease the restrictions;
a receiving step where the disk drive device receives the instruction to ease the restrictions;
a requesting step where the control device makes a transfer request to the disk drive device after the instructing step, the transfer request requesting to transfer data; and
a transferring step where the disk drive device transfers data to and from the disk in accordance with the transfer request and the instruction, so that data is transferred between the control device and the disk drive device.

27. The program of Claim 26,
wherein in the storing step, the sector information shows the extent, to which a number of sectors that can be accessed at a time can be extended, and
the disk drive device extends the number of sectors in the receiving step on receiving the instruction.

28. The program of Claim 26,
wherein in the storing step, the sector information shows the extent, to which an original size of each of the sectors can be extended, the extended size being regarded by the disk drive device as a size of each sector,
the disk drive device extends the original size of each of the sectors in the receiving step on receiving the instruction, and
the disk drive device handles a part having the extended size in the disk as a sector in the transferring step.

29. The program of Claim 26,
wherein in the storing step, the sector information shows the extent, to which a range used for designating an address can be extended, the address being assigned to a sector of the disk, the range being used in the transfer request from the control device, and
the disk drive device extends the range used for designating the address in the receiving step on receiving the instruction.

## Amended claims

### Amended claims under Art. 19.1 PCT

**1.** (Amended) A disk drive device that transfers data to and from an external device, comprising:
a disk that stores data in units of sectors;
a storing unit operable to store sector information showing an extent to which restrictions can be eased for data transfer, wherein the restrictions are related to a number of physical sectors to be handled on the disk; and
a control unit operable to send the sector information in response to an inquiry from the external device about the sector information, and transfer data to and from the disk in accordance with a transfer request for transferring data and with an instruction from the external device when the control unit receives the transfer request while in a state of being instructed by the instruction to ease the restrictions.

**2.** The disk drive device of Claim 1,
wherein when instructed by the instruction from the external device to ease the restrictions, the control unit sets contents of the instruction in the sector information.

**3.** (Amended) The disk drive device of Claim 2,
wherein the sector information shows the extent, to which a number of physical sectors that can be accessed at a time can be extended, and
the control unit extends the number of physical sectors when instructed to ease the restrictions.

**4.** The disk drive device of Claim 3,
wherein the disk drive device transfers data to and from the external device in accordance with Advanced Technology Attachment (ATA), and
the sector information is included in drive information that relates to the disk drive device and that is requested by the external device according to ATA before data transfer is performed.

**5.** The disk drive device of Claim 4,
wherein the sector information is provided in a word assigned for vender definition in the drive information.

**6.** (Amended) The disk drive device of Claim 2,
wherein the sector information also shows an extent, to which a size regarded by the control unit as a size of a physical sector can be extended,
the control unit extends the regarded size on receiving the transfer request while in a state of being instructed by the external device to ease the restrictions, and thereafter handles, as a logical sector, a part having the extended size in the disk.

**7.** (Amended) The disk drive device of Claim 6,
wherein when receiving the transfer request with an address of a logical sector designated while in a state of being instructed to ease the restrictions, the control unit (a) handles, as a logical sector, a plurality of physical sectors having the extended size, (b) converts the designated address in accordance with the number of the plurality of physical sectors, and (c) transfers data to and from physical sectors specified by the converted address.

**8.** (Amended) The disk derive device of Claim 2,
wherein the external device makes the transfer request in which an address is designated, the address being assigned to a physical sector of the disk,
the sector information also shows an extent to which a range used for designating the address can be extended, and
the control unit extends the range used for designating the address when instructed by the external device to ease the restrictions.

**9.** (Amended) A control device that controls a disk drive device, which (a) comprises a disk storing data in units of sectors, (b) stores sector information showing an extent to which restrictions can be eased for data transfer, the restrictions being related to a number of physical sectors to be handled on the disk, and (c) transfers data to and from the disk in accordance with a transfer request for transferring data and with an instruction on receiving the transfer request while in a state of being instructed by the instruction to ease the restrictions,
wherein the control device makes an inquiry about the sector information to the disk drive device, instructs, in accordance with the sector information, the disk drive device to ease the restrictions, and then makes the transfer request to the disk drive device so as to transfer data to and from the disk drive device.

**10.** (Amended) The control device of Claim 9,
wherein the sector information shows the extent, to which a number of physical sectors that can be accessed at a time can be extended, and,
the control device instructs, in accordance with the extent, the disk drive device to extend the number of physical sectors.

**11.** The control device of Claim 10, transferring data to and from the disk drive device in accordance with ATA, and making the inquiry about the sector information to the disk drive device when making a request in accordance with ATA for drive information relating to the disk drive device.

**12.** (Amended) A transfer method used for a disk drive device that transfers data to and from an external device and that includes a disk storing data in units of sectors, the transfer method including:
a storing step for storing sector information showing an extent to which restrictions can be eased for data transfer, wherein the restrictions are related to a number of physical sectors to be handled on the disk;
a sending step for sending the sector information in response to an inquiry from the external device about the sector information;
a receiving step for receiving, from the external device, an instruction to ease the restrictions; and
a transferring step for transferring, when a transfer request for transferring data is received from the external device, data to and from the disk in accordance with the transfer request and the instruction.

**13.** (Amended) The transfer method of Claim 12,
wherein in the storing step, the sector information shows the extent, to which a number of physical sectors that can be accessed at a time can be extended, and
the number of physical sectors is extended in the receiving step when the instruction to ease the restrictions is received.

**14.** (Amended) The transfer method of Claim 12,
wherein the sector information also shows an extent, to which a size regarded by the control unit as a size of a physical sector can be extended,
the regarded size is extended in the receiving step when the instruction to ease the restrictions is received from the external device, and
a part having the extended size in the disk is handled as a logical sector in the transferring step.

**15.** (Amended) The transfer method of Claim 12,
wherein the sector information also shows an extent to which a range used for designating an address can be extended, the address being assigned to a physical sector of the disk, the range being used in the transfer request from the external device, and
the range used for designating the address is extended in the receiving step when the instruction to ease the restrictions is received.

**16.** (Amended) A control method for controlling a disk drive device that (a) comprises a disk storing data in units of sectors, (b) stores sector information showing an extent to which restrictions can be eased for data transfer, the restrictions being related to a number of physical sectors to be handled on the disk, and (c) transfers data to and from the disk in accordance with a transfer request for transferring data and with an instruction on receiving the transfer request while in a state of being instructed by the instruction to ease the restrictions, wherein the control method includes:
an inquiry step for making an inquiry about the sector information to the disk drive device;
an instructing step for instructing, in accordance with the sector information, the disk drive device to ease the restrictions;
a requesting step for making the transfer request to the disk drive device after the instructing step; and
a transferring step for transferring data to and from the disk drive device.

**17.** (Amended) The control method of Claim 16,
wherein the sector information shows the extent, to which a number of physical sectors that can be accessed at a time can be extended, and
the disk drive device is instructed to extend the number of physical sectors in accordance with the extent in the instructing step.

**18.** (Amended) A transfer method for transferring data between a disk drive device and a control device that controls the disk drive device, the disk drive device including a disk that stores data in units of sectors, the transfer method including:
a storing step where the disk drive device stores sector information showing an extent to which restrictions can be eased for data transfer, wherein the restrictions are related to a number of physical sectors to be handled on the disk;
an inquiry step where the control device makes an inquiry about the sector information to the disk drive device;
a sending step where the disk drive device sends the sector information to the control device in response to the inquiry;
an instructing step where the control device instructs, in accordance with the sector information, the disk drive device to ease the restrictions;
a receiving step where the disk drive device receives the instruction to ease the restrictions;
a requesting step where the control device makes a transfer request to the disk drive device after the instructing step, the transfer request requesting to transfer data; and
a transferring step where the disk drive device transfers data to and from the disk in accordance with the transfer request and the instruction, so that data is transferred between the control device and the disk drive device.

**19.** The transfer method of Claim 18,
wherein in the receiving step, the disk drive device sets contents of the instruction in the sector information.

**20.** (Amended) The transfer method of Claim 19,
wherein in the storing step, the sector information shows the extent, to which a number of physical sectors that can be accessed at a time can be extended, and
the disk drive device extends the number of physical sectors in the receiving step on receiving the instruction.

**21.** The transfer method of Claim 20, conforming to ATA,
wherein in the inquiry step, the control device makes the inquiry about the sector information to the disk drive device when making a request in accordance with ATA for drive information relating to the disk drive device.

**22.** The transfer method of Claim 21,
wherein in the storing step, the sector information is provided in a word assigned for vender definition in the drive information.

**23.** (Amended) The transfer method of Claim 19,
wherein the sector information also shows an extent, to which a size regarded by the control unit as a size of a physical sector can be extended,
the disk drive device extends the regarded size in the receiving step on receiving the instruction, and
the disk drive device handles a part having the extended size in the disk as a logical sector in the transferring step.

**24.** (Amended) The transfer method of Claim 23,
wherein the disk drive device extends the original size by an integral multiple in the receiving step on receiving the instruction,
the control device makes the transfer request, in which an address of a logical sector is designated, in the requesting step,
the disk drive device handles, as a logical sector, a plurality of physical sectors having the extended size, converts the designated address in accordance with the number of the plurality of physical sectors, and transfers data to and from physical sectors specified by the converted address in the transferring step.

**25.** (Amended) The transfer method of Claim 19,
wherein the sector information also shows an extent to which a range used for designating an address can be extended, the address being assigned to a physical sector of the disk, the range being used in the transfer request from the control device, and
the disk drive device extends the range used for designating the address in the receiving step on receiving the instruction.

**26.** (Amended) A program for transferring data between a disk drive device and a control device that controls the disk drive device, the disk drive device including a disk that stores data in units of sectors, the program including:
a storing step where the disk drive device stores sector information showing an extent to which restrictions can be eased for data transfer, wherein the restrictions are related to a number of physical sectors to be handled on the disk;
an inquiry step where the control device makes an inquiry about the sector information to the disk drive device;
a sending step where the disk drive device sends the sector information to the control device in response to the inquiry;
an instructing step where the control device instructs, in accordance with the sector information, the disk drive device to ease the restrictions;
a receiving step where the disk drive device receives the instruction to ease the restrictions;
a requesting step where the control device makes a transfer request to the disk drive device after the instructing step, the transfer request requesting to transfer data; and
a transferring step where the disk drive device transfers data to and from the disk in accordance with the transfer request and the instruction, so that data is transferred between the control device and the disk drive device.

**27.** (Amended) The program of Claim 26,
wherein in the storing step, the sector information shows the extent, to which a number of physical sectors that can be accessed at a time can be extended, and
the disk drive device extends the number of physical sectors in the receiving step on receiving the instruction.

**28.** (Amended) The program of Claim 26,
wherein the sector information also shows an extent, to which a size regarded by the control unit as a size of a physical sector can be extended,
the disk drive device extends the regarded size in the receiving step on receiving the instruction, and
the disk drive device handles a part having the extended size in the disk as a logical sector in the transferring step.

**29.** (Amended) The program of Claim 26,
wherein the sector information also shows an extent to which a range used for designating an address can be extended, the address being assigned to a physical sector of the disk, the range being used in the transfer request from the control device, and
the disk drive device extends the range used for designating the address in the receiving step on receiving the instruction.

## Amended claims

### Amended claims under Art. 19.1 PCT

Amended Claim 1 clarifies that the sector information relates to a number of physical sectors.

Amended Claim 3 clarifies that the sector information relates to a number of physical sectors.

Amended Claim 6 clarifies that the sector information also relates to a size of a physical sector and that a part of the disk is handled as a logical sector.

Amended Claim 7 clarifies that the address designated for the control unit is an address of a logical sector, that a logical sector consists of a plurality of physical sectors, and that the designated address is converted in accordance with the number of the physical sectors.

Amended Claim 8 clarifies that the sector information also relates to an address assigned to a physical sector.

Amended Claim 9 clarifies that the sector information relates to a number of physical sectors.

Amended Claim 10 clarifies that the sector information relates to a number of physical sectors.

Amended Claim 12 clarifies that the sector information relates to a number of physical sectors.

Amended Claim 13 clarifies that the sector information relates to a number of physical sectors.

Amended Claim 14 clarifies that the sector information also relates to a size of a physical sector and that a part of the disk is handled as a logical sector.

Amended Claim 15 clarifies that the sector information also relates to an address assigned to a physical sector.

Amended Claim 16 clarifies that the sector information relates to a number of physical sectors.

Amended Claim 17 clarifies that the sector information relates to a number of physical sectors.

Amended Claim 18 clarifies that the sector information relates to a number of physical sectors.

Amended Claim 20 clarifies that the sector information relates to a number of physical sectors.

Amended Claim 23 clarifies that the sector information also relates to a size of a physical sector and that a part of the disk is handled as a logical sector.

Amended Claim 24 clarifies that the address designated for the disk drive device is an address of a logical sector, that a logical sector consists of a plurality of physical sectors, and that the designated address is converted in accordance with the number of the physical sectors.

Amended Claim 25 clarifies that the sector information also relates to an address assigned to a physical sector.

Amended Claim 26 clarifies that the sector information relates to a number of physical sectors.

Amended Claim 27 clarifies that the sector information relates to a number of physical sectors.

Amended Claim 28 clarifies that the sector information also relates to a size of a physical sector and that a part of the disk is handled as a logical sector.

Amended Claim 29 clarifies that the sector information also relates to an address assigned to a physical sector.
